# EUROPEAN PATENT APPLICATION

(11) **EP 4 492 655 A1**
(43) Date of publication of application: **15.01.2025**
(21) Application number: 23382710.4
(22) Date of filing: 11.07.2023
(51) Int. Cl.: H02M 1/00, H01M 6/34, H02M 3/335

(54) **SEAWATER OR SOIL-BASED BATTERY CELLS WITH ISOLATED BOOST CONVERTERS FOR SERIES CONNECTION**

(71) Applicant: Kyomu Innovation, S.L., 28220 Majadahonda (ES)
(72) Inventor: FERNANDEZ FERNANDEZ, Sergio Alejandro, 28220 MAJADAHONDA (ES); DÍEZ SAN MARTÍN, José Manuel, 08395 SANT POL DE MAR (ES)
(74) Representative: ZBM Patents - Zea, Barlocci & Markvardsen

(57) **Abstract**

Energy generating systems, cells and cell assemblies as disclosed in the present specification comprise a pair of electrodes having different electron affinity, and an electronic interface comprising a DC-DC boost converter and galvanic isolation. The system may be deployed in an electro-generating medium such as seawater for efficient and non-polluting energy generation, which does not depend on sunlight or climate conditions.

## Description

### BACKGROUND

It is known in the state of the art that two electrodes submerged in a flow of a conductive liquid can generate electricity. Even though water itself is not conductive, conductivity can be achieved using an aqueous substrate, the conductivity being produced by elements in suspension therein, which provide electrical charges or salts that help generate chemical reactions of oxidation and reduction. Those chemical reactions produce a transmission of charges (i.e., the principle of electrolysis) within the aqueous substrate, and thus an electricity flow is generated between the two electrodes. Examples of an aqueous substrate may be a suitable type of water such as tap water (with its impurities or salts), or seawater.

If only a pair of electrodes (one positive and one negative electrode) are used to generate electricity, the generated electrical currents may be of a magnitude of mA or µA. Heating may provide an increase in electrical power generation, which may result in currents in the order of 30mA to 60mA when water is heated up to almost boiling point (100 °C), and kinetic energy contribution (water current) may also cause the electrons dispersed in a liquid to be "energized" in such a way that they generate a difference of electric charge to the electrodes, which results in electrical power. However, the electrical power generation that can be achieved with a pair of electrodes in media such as water is very low.

Furthermore, it is difficult to generate a high amount of electrical power by using several pairs of electrodes submerged in a common aqueous substrate, due to their electrical interconnection through the substrate itself. Therefore, there is a need to find a structure which allows scalability, to provide a high enough electrical power from such types of substrates.

### SUMMARY

According to a first aspect of the invention, a system for generating electrical energy comprises:
- a pair of electrodes to be placed in contact with an electro-generating medium and provide a source voltage between them, the pair of electrodes comprising a first electrode of a first material and a second electrode of a second material, the first material and the second material having different electron affinity; and
- a DC-DC boost converter connected to the pair of electrodes to step up the source voltage from the pair of electrodes.

The DC-DC (direct current to direct current) boost converter may be designed such that it activates with a very low source voltage from the electrodes, for example lower than about 0.3V.

Some embodiments of the system may also be foreseen which do not have a DC-DC boost converter, but a different kind of DC-DC converter connected to the pair of electrodes allowing to transfer energy and manage electricity provided by the electrodes, without necessarily increasing the source voltage from the pair of electrodes.

When the pair of electrodes are placed in contact with an electro-generating medium such as seawater, e.g. partially submerged or inserted in the medium, the system together with the medium form an energy generating cell similar to a battery, the electrodes constituting the anode and cathode.

A suitable electro-generating medium may be a liquid wherein a flow of electrons or charges is generated towards the electrodes, such as conductive aqueous media with a dissolved electrolyte, with the capacity to generate redox chemical reactions that provide a flow of electrons. Such a medium may be for example seawater, freshwater with dissolved impurities that provide a flow of electrically charged particles, water from sewage systems, and others.

The electro-generating medium may also be different from a liquid; for example, it may be a soil with a certain degree of electrical conductivity, with vegetation that through photosynthesis produces a flow of electrons, originating around the roots and conducted through the soil itself. A suitable element to increase the voltage may be provided in the soil between the electrodes.

Furthermore, the ability of operating both with aqueous media and soil implies that systems for generating electrical energy as disclosed has amphibious properties.

In embodiments of the systems disclosed herein, the materials of the electrodes may be aluminum, copper, graphene, graphite, brass, or other composites, metals or alloys.

In some examples, the system for generating electrical energy may further comprise a galvanic isolator connected to the output of the DC-DC boost converter such as to provide galvanic isolation between the electrodes and the system output.

Galvanic isolation is a technique to prevent DC current flow between different circuits or functional sections of an electrical system, while allowing the transfer of power and signals. The technique is used in a number of applications, e.g. for preventing accidental electric shock to a user in apparatus that have high voltage and low voltage sections, for preventing corrosion e.g. in boats, for breaking ground loops, e.g. by preventing unwanted current from flowing between two units sharing a ground conductor, and others.

In some examples, the galvanic isolator is an isolated DC-DC converter, and it may comprise an inductive isolator, e.g. an isolator that employs transformer technology.

The presence of a galvanic isolator allows connecting in series multiple systems as disclosed above, and placing the electrodes of the multiple systems in contact with a common electro-generating medium, such as e.g. seawater, to form a larger-scale energy generating cell assembly in which the output voltage of the assembly is higher than the output voltage of each cell.

Two or more systems as disclosed are connected in series by joining the positive output terminal of the galvanic isolator of each system, with the negative output terminal of the galvanic isolator of the next system.

A galvanic isolator, such as an inductive galvanic isolator, may need a minimum threshold input voltage in order to operate: for example, the voltage provided by a pair of electrodes in seawater or similar electro-generating medium, without the provision of a booster, may not be sufficient for activating the galvanic isolator and allowing the serial connection of multiple pairs of electrodes. The combination of a DC-DC booster converter and a galvanic isolator, as described above, is therefore particularly convenient in that it allows both stepping up the output voltage from a pair of electrodes and connecting in series several pairs of electrodes to increase the total output voltage and the energy generation.

In embodiments of a system for generating electrical energy, and of a cell comprising such a system as well as an electro-generating medium such as an aqueous medium or a soil substrate, the system may comprise a pair of electrodes, a DC-DC booster converter and a galvanic isolator, as described above, wherein the DC-DC booster converter and galvanic isolator may be two different electronic circuits connected to each other, or may be a single electronic circuit or chip incorporating both functions.. The system and cell according to embodiments disclosed herein may additionally incorporate corresponding driver hardware with proper firmware to command converter circuits and/or to optimize the system output voltage.

Embodiments of a system as disclosed in the present specification may be deployed in any location where a suitable electro-generating medium or substrate is available (e.g. in the sea), to constitute an efficient and non-polluting energy generation facility, making it possible to achieve an electrical power efficiency similar to that of solar panel technology, whilst not depending on climate conditions, such as direct sunlight on a solar panel.

### BRIEF DESCRIPTION OF THE DRAWINGS

Non-limiting examples of the present disclosure will be described in the following, with reference to the appended drawings, in which:
Figure 1 shows an example of a system for generating electrical energy according to the present disclosure.
Figure 2 shows a pair of electrodes deployed in a medium consisting of soil, to which examples of the present disclosure may be applied.
Figure 3 shows an example of a DC-DC boost converter, according to an example of the present disclosure.
Figure 4 shows an example of a galvanic isolator, according to an example of the present disclosure.
Figure 5 shows an example of an energy generating cell assembly, according to an example of the present disclosure.

### DETAILED DESCRIPTION OF EXAMPLES

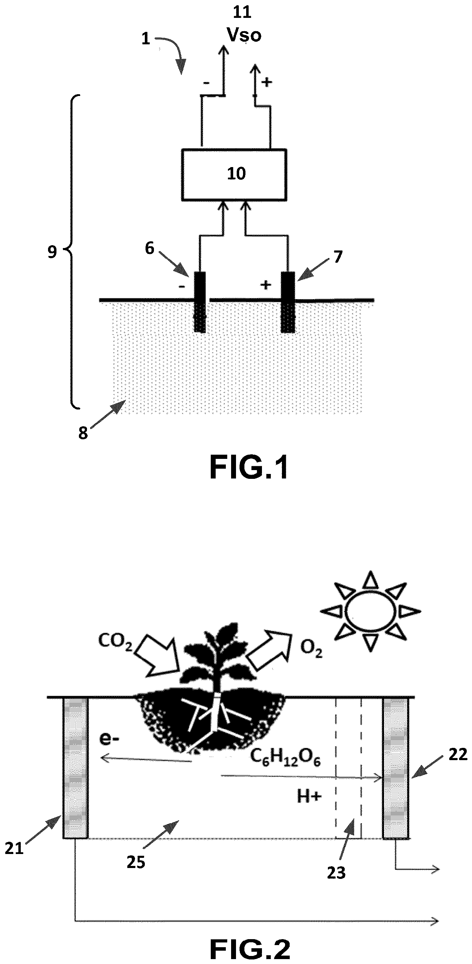

In figure 1, an example of a system 1 for generating electrical energy according to the present disclosure is depicted.

The system 1 comprises a pair of electrodes having different electron affinity, for example a cathode 6 made of copper and an anode 7 made of aluminum. The electrodes 6 and 7 are connected to the input of an electronic interface 10.

When the electrodes 6 and 7 are at least partially submerged or inserted in an electro-generating medium 8, for example seawater, a source voltage is generated between the electrodes 6 and 7 and fed to the electronic interface 10.

The electronic interface 10 is designed to step up the voltage generated by the electrodes to provide a higher system output voltage 11 Vso, and also to provide at least a degree of galvanic isolation between the electrodes and the output of the system.

The system 1 and the electro-generating medium 8 that is in contact with the electrodes form an energy generating cell 9.

In one example, the electronic interface 10 may be embodied by a low input voltage synchronous boost converter chipset, from the model series TPS6120x from Texas Instruments. Such chipsets are what is commonly known as a "buck-boost DC-DC converter (Ultra Low Voltage Boost converter DC-DC)". A specific model which may work for the system according to the present disclosure may be TEXAS INSTRUMENTS TPS61200. It is a module that can provide a conversion from a 0.3V direct current input signal. The activation of the circuit at ultra low power with low input voltage, allows the activation of the input of the chipset using as input the electrical generation of a pair of electrodes when using an aqueous or soil substrate (as previously described), such that it can start operating from said 0.3V input signal, provided that the impedance of the circuit as a load applied to the electrodes allows to reach and exceed the activation voltage above 0.3V.

In some examples, the electronic interface 10 may comprise a DC-DC boost converter connected to the electrodes 6, 7 and a galvanic isolator connected to the output of the DC-DC boost converter and providing the system output. Examples of these components will be described in more detail later on.

A suitable electro-generating substrate or medium 8, may be a conductive liquid aqueous medium, for example seawater, potable or non-potable water from riverbeds, canals, reservoirs, dams, marshes, wetlands or irrigation systems, or water inputs from domestic mains or sewage systems. The substrate may alternatively be soil or land under the influence of electric currents created by photosynthetic processes of plants, and/or the electrolytic and conductive properties of the soil.

For example, Figure 2 shows an energy generating cell with a solid substrate, in particular soil, as an electro-generating medium. A pair of electrodes comprising a cathode 21 and an anode 22 are shown deployed in a soil 25 with a certain degree of electrical conductivity and a certain degree of humidity, with vegetation and microorganisms. The vegetation captures energy from the sunlight and uses it to produce organic compounds through the process of photosynthesis, consuming carbon dioxide CO₂ and producing oxygen O₂ and glucose C₆H₁₂O₆. The process produces a flow of electrons e⁻ and ions H⁺ originating in the environment of the roots and conducted through the soil 25 itself to the cathode 21 and anode 22. An intermediate membrane 23 may be placed between the electrodes 21, 22 to increase the voltage between the electrodes 21, 22.

An electronic interface, such as interface 10 mentioned above in relation to Figure 1 and described in more detail further on, may be connected to the electrodes 21 and 22 of Figure 2 to form a system and a cell according to examples of the present disclosure.

The electronic interface may comprise a DC-DC booster converter and a galvanic isolator.

In some embodiments, the DC-DC booster converter may comprise at least two semiconductor switches, and an inductive/capacitive reactance. The two semiconductor switches may be used to generate an alternating signal from the incoming input signal at the input of the DC-DC booster converter. Furthermore, an inductive/capacitive reactance connected in series after the semiconductor switches may be used to charge the capacitive part of the reactance to a voltage higher than the voltage inputted to the DC-DC booster converter. The semiconductor switches may be controlled by a pulsed signal ordering the switching on and off therein, to generate the alternating signal to be inputted to the inductive/capacitive reactance. Furthermore, the semiconductor switches may comprise MOSFET type semiconductors (whether stand alone MOSFET transistors or chipsets comprising one or more MOSFETs) which may be controlled by a predetermined control pulsed signal.

Therefore, when using such arrangement of semiconductor switches in series with an inductive/capacitive reactance, it is possible to obtain at the output of the DC-DC booster converter a direct voltage signal which is higher than the input of the DC-DC booster converter (i.e., the voltage signal obtained from the pair of electrodes connected therein).

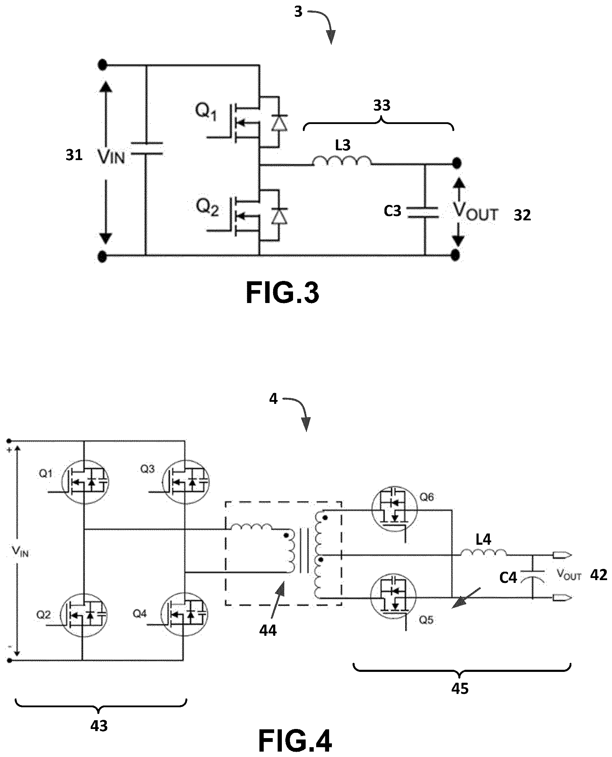

Figure 3 shows a schematic of a generic example of a DC-DC boost converter 3 that may be at least a first part of the electronic interface 10 of Figure 1. The DC-DC boost converter 3 comprises an input 31 Vin, which is to be connected to a pair of electrodes as disclosed above, and an output 32 Vout, which, in this example, is to be connected in parallel with a galvanic isolator 4 that will be described later on.

The DC-DC boost converter 3 has two semiconductor switches Q1 and Q2, and an inductive/capacitive reactance 33. The semiconductor switches Q1 and Q2 are activatable at ultra-low voltage, and in this example are two MOSFET type switches. Q1 and Q2 are, in this example, two chipsets comprising a plurality of programmable MOSFET switches each, wherein each plurality of MOSFET switches are controlled by a corresponding pulsed control signal. Furthermore, in this example, the inductive/conductive reactance 33 comprises an inductance L3 in series and a capacitor C3 in parallel. Thus, when a signal Vin is entered at the input of the DC-DC boost converter 3, Q1 and Q2 convert the continuous signal Vin into an alternating signal (for example, a square AC alternating signal) at the input of the inductance L3. This way, inductance L3 in combination with capacitor C3 in such configuration are able to increase the continuous component of the incoming AC signal, whilst converting it back to only continuous (DC) at the output 32 Vout of the DC-DC boost converter 3. This way it is assured that Vout is a continuous signal higher than Vin.

In some embodiments, the galvanic isolator may further comprise a direct to alternating current DC/AC converter circuit, connected to an inductive isolator. More specifically, the DC/AC converter circuit and inductive isolator may be connected in series one after the other, in such a way that the DC/AC converter circuit converts the DC signal inputted from a previous DC-DC booster converter, into an AC signal, allowing the inductive isolator to pass on the signal in such a way that the output of the galvanic isolator "floats" relative to ground of the previous circuits, to avoid potential ground loops.

The direct to alternating current DC/AC converter circuit may comprise a diode bridge circuit. Such a circuit may function as a diode bridge, in the sense that an incoming DC signal may be converted into an AC signal by means of alternating electrical elements over time. Such electrical elements may be, for example, at least one semiconductor switch, or at least one MOSFET semiconductor switch.

The inductive isolator may be further connected in series to an inductive/capacitive reactance, the reactance connected after the diode bridge circuit.

Figure 4 shows an example of a galvanic isolator according to the present disclosure that may be a second part of an example electronic interface 10 of Figure 1, with an input 41 Vin of the galvanic isolator 4 being connected to the output 32 Vout of the DC-DC boost converter 3 described above. The galvanic isolator 4 comprises a DC/AC converter circuit 43, connected in series with an inductive isolator 44 and a the inductive/conductive reactance 45.

More specifically, in this example, the DC/AC converter circuit 43 comprises MOSFET semiconductor switches Q1-Q4 which function as a diode bridge, to convert an incoming DC signal 41 Vin into an AC signal, by alternating each semiconductor switch Q1-Q4 over time. Then, the inductive isolator 44 passes on the signal isolating the ground of the previous circuits from its output, and the inductive/conductive reactance 45 (inductance L4 and capacitor C4) converts the output signal of the inductive isolator 44 back to a DC signal in a similar way as in the case of the inductive/conductive reactance of the DC-DC boost converter 3 described above.

This way, by connecting the galvanic isolator 4 to the output of a DC-DC boost converter such as the one of figure 3, the isolator 4 breaks the ground loop between the pair of electrodes that is connected to the input 31 of the DC-DC boost converter and the output 42 of the galvanic isolator 4.

Therefore, as will be described in the following, when connecting two or more systems 1 (Figure 1) in series, forming an assembly, the galvanic isolator 4 allows isolating the grounds of each pair of electrodes 2 and 3, preventing unwanted current from flowing between the pair of electrodes and therefore allowing an increase of the total output voltage of the assembly with respect to the voltage of a single system 1 with a pair of electrodes 2 and 3.

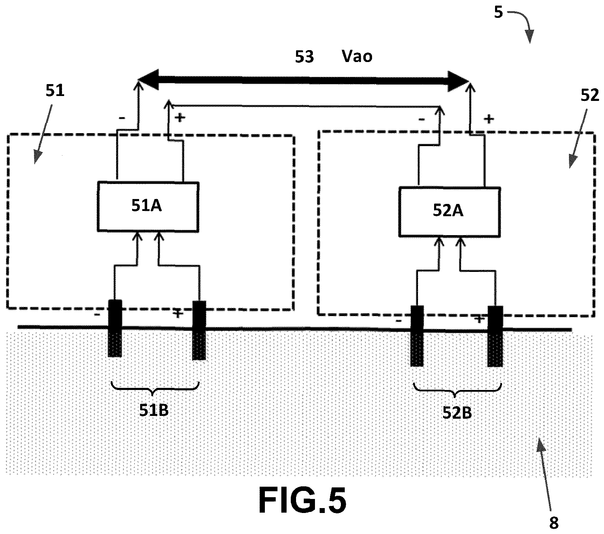

Figure 5 shows an example of an energy generating cell assembly 5, comprising two systems 51, 52, each configured for example as the system 1 of Figure 1, deployed in a common electro-generating medium 8. More particularly, each system 51, 52 comprises a respective electronic interface 51A, 52A, and a respective pair of electrodes 52A, 52B at least partially submerged or inserted in the medium 8.

As shown in Figure 5, the systems 51, 52 are connected in series, with the positive output of interface 51A connected to the negative output of interface 52A, thus rendering the negative output of interface 51A and positive output of interface 52A as the output 53 Vao of the cell assembly 5.

In examples, the electronic interfaces 51A and 52A may be as disclosed above in relation with electronic interface 10 of Figure 1; they are designed to step up the voltage generated by the electrodes and provide a degree of galvanic isolation between the electrodes and the output of the system, and may be configured with a DC-DC boost converter and a galvanic isolator such as those disclosed above in Figures 3 and 4. By virtue of the voltage boost and galvanic isolation provided by the electronic interfaces 51A and 52A, an electrical power may be generated at the cell assembly output 53 which is higher than the electrical power generated by a single cell with a pair of electrodes.

As disclosed above for Figure 1, in a basic example the electronic interfaces 51A and 52A may be embodied by a chipset from the model series TPS6120x from Texas Instruments.

Even though the example of Figure 5 only comprises an assembly of two cells, it will be understood that multiple systems and cells may be connected series in the same way, to obtain high scale energy generation cell assemblies and installations that can be deployed in various locations and environments, on water or land.

Such energy generating cell assemblies as may provide enough energy for multiple technical and commercial applications, in a similar way as solar panels or other kinds of clean energy. However, with respect e.g. to wind power or solar power, the technology disclosed herein has the advantage that it may operate 24/7, without depending on environmental or weather conditions.

For example, based on the experiments that will be described in the following, it is foreseen that a single cell taking up a surface of about 2 cm², with an optimized design, may generate up to 5 mA at a voltage of about 1,5V: an assembly of just one hundred of such cells, connected as described, would therefore take up a surface of about 2 m² and could be expected to generate a power of about 75W (about 0.5 A at about 150V). By way of comparison, a photovoltaic solar panel with a similar surface may generate 300-400W at full insolation but generates no power during the night or in bad weather conditions.

### EXPERIMENTS

In the first place, some experiments were performed to study the influence of different factors on the voltage generated between two electrodes (metal tubes of Cu and Al) submerged in an aqueous liquid medium, with a view to optimize the design of systems according to the present invention.

The maximum voltage is limited among other reasons by the specific energy of the oxidation and reduction reactions in the medium. It has been observed that if no electronic interface is used, the voltage between the pair of electrodes reaches a "saturation" level, i.e., the electric potential of the metal electrodes reaches a stable maximum.

The observed factors influencing the voltage contributed by a Cu-Al electrode pair were:
- Submerged or sunken surface of the electrodes: having a wider surface area submerged in a water-type substrate captures more electrical charge. However, it was observed that a level of surface area exists above which electrical generation no longer increases: when the length of electrodes submerged increased from 1 cm to 8 cm, the voltage increased from 0,40V to 0,65V, but did not increase further even if the electrodes were submerged beyond 8 cm.
- Properties of the medium: the concentration of salts and impurities in an aqueous substrate or, in the case of soils, the level of humidity therein;

- Type of electrode material: for example, Cu has a high electro affinity difference with respect to Al, and therefore a higher voltage is observed between copper and aluminum pairs than between pairs of other materials, for example, brass and aluminum;
- Geometry and/or respective position of the electrodes: it has been observed that the distance between electrodes is not a substantially influential factor;
- Level of agitation and turbulence of the aqueous medium: although the system does not require kinetic energy of the water, it was observed in experiments that the more agitation or stronger streams on electrodes in water, the higher electricity generated by electrodes. For instance, it was observed that some manual agitation in water generated some more hundredths of a volt by the tested electrodes (from 0.32V up to 0.37V).

It was also observed that connecting several pairs of CU-AI electrodes in series without using any interface circuit between them, does not result in an increase of the output voltage with respect to a single pair: in other words, it is not possible to connect in series several simple pairs of electrodes in order to obtain a higher output voltage.

Further experiments carried out by the inventors show the potential of the present invention, and in particular of the scalability provided by the possibility of increasing the output voltage by connecting in series several systems as described, comprising a pair of electrodes and a suitable electronic interface.

In these experiments, the output voltage of an example system for generating electric energy was measured. The system employed for the experiments is as disclosed in relation to Figure 1, comprising a Cu electrode, an Al electrode, and a chipset TPS61200 from Texas Instruments connected to the electrodes. This chipset steps up the voltage between the pair of electrodes and provides a certain degree of galvanic isolation.

In a first experiment, such a system with a single pair of electrodes was introduced in a vessel containing tap water with common salt (NaCl) at a concentration of about 10 grams per liter (much lower than the concentration of salt in seawater). The output voltage of the system was 0.9V.

In practice, adding salt to the water increases the voltage between the Cu-Al electrodes, thus activating the chipset that steps up the voltage: if no salt is added, the chipset circuits would not be activated, because the necessary threshold voltage input to the circuit would not be reached. Since a salt concentration in the order of 10g/liter has been found sufficient to activate the chipset, it could be deduced that in seawater (with a concentration of about 35 g/l of salt) the system would work with even better performance.

In a second experiment, two systems identical to the system used in the first experiment, were connected in series, as shown e.g. in Figure 5, and introduced in a vessel with the same medium as the first example. The output voltage of the assembly of the two systems in series was around 2V, and then stabilized at 1.8V for a few minutes. A commercial red LED diode was connected to the system output as a load, and the cell assembly made it glow slightly, showing that the current exceeded 1mA, and therefore a power of at least 1.7 mW was being generated.

Finally, in a third experiment, three systems identical to the system used in the previous experiments, were similarly connected in series and introduced in a vessel with the same medium. The output voltage of the assembly of the two systems in series was around 2,8V.

Comparing with the second experiment and taking into account that a commercial red LED activates starting at 1.8V and its current is 10 to 15 mA, it seems that the cell assembly with three pairs of electrodes (and corresponding electronic interfaces) in series could reach powers of between 1 mW and 6 mW.

In the three examples, the initial output voltage indicated above then decreased and stabilized at lower values for a few minutes. However, the experiments prove that an electronic interface as disclosed above has the potential of allowing scaling the cell assembly and achieving output voltages that increase with the number of systems connected in series.

In the above cell assembly of the third experiment, i.e., with three systems connected in series, power measurements were performed using different resistors R by way of loads connected at the output of the cell assembly.

Power was measured as P = V²/R. The results of the measurements are in Table 1.

| **Table 1** | | |
|---|---|---|
| **LOAD (KΩ)** | **Output voltage (V)** | **Power (µW)** |
| No load | 2.8 | - |
| R = 1 KΩ | 0.12 | 10 |
| R = 10 KΩ | 1.25 | 160 |
| R = 100 KΩ | 1.5 | 20 |

The table shows that maximum power is obtained for an intermediate load impedance. Therefore, even though the results show the system disclosed herein achieves the desired effects of generating electric energy and increasing the output voltage and generated power by simply connecting several systems or cells in series, the electronic interface may still be improved for optimizing its performance by adjusting the input impedance of the electronic interface circuit.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples but should be determined only by a fair reading of the claims that follow. If reference signs related to drawings are placed in parentheses in a claim, they are solely for attempting to increase the intelligibility of the claim and shall not be construed as limiting the scope of the claim.

## Claims

1. A **system** for generating electrical energy, comprising:
• a pair of electrodes to be placed in contact with an electro-generating medium and provide a source voltage between them, the pair of electrodes comprising a first electrode of a first material and a second electrode of a second material, the first material and the second material having different electron affinity; and
• a DC-DC boost converter connected to the pair of electrodes to step up the source voltage from the pair of electrodes.

2. A system according to claim 1, wherein the electrodes are of materials selected from aluminum, copper, graphene, graphite, brass or alloys thereof.

3. A system according to one of claims 1 or 2, further comprising a galvanic isolator connected to the output of the DC-DC boost converter, to provide galvanic isolation between the electrodes and a system output.

4. A system according to claim 3, wherein the galvanic isolator comprises an inductive isolator.

5. A system according to claim 4, wherein the inductive isolator comprises a DC-AC converter circuit and a transformer connected to the output of the DC-AC converter circuit.

6. A system according to claim 5, wherein the DC-AC converter circuit comprises a diode bridge with at least one semiconductor switch, such as a MOSFET switch.

7. A system according to claim 6, wherein the transformer comprises an inductive/capacitive reactance connected in series after the diode bridge circuit.

8. A system according to one of the preceding claims, wherein the DC-DC boost converter is configured to be activatable with a source voltage below 0.4V.

9. A system according to one of the preceding claims, wherein the DC-DC boost converter comprises two semiconductor switches and an inductive/capacitive reactance.

10. A system according to claim 9, wherein the semiconductor switches are MOSFET based chipsets.

11. An assembly for generating electrical energy, comprising two or more systems according to one of claims 3 to 10 connected in series by joining a positive output terminal of the galvanic isolator of each system, with a negative output terminal of the galvanic isolator of the next system.

12. An energy generating cell, comprising a system according to one of claims 1 to 10 and an electro-generating medium selected between an aqueous medium and soil, wherein each electrode is at least partially submerged or inserted in the electro-generating medium.

13. An energy generating cell assembly, comprising an assembly for generating electrical energy according to claim 11 and an electro-generating medium selected between an aqueous medium and soil, wherein each electrode is at least partially submerged or inserted in the electro-generating medium.
